# DEMANDE DE BREVET EUROPEEN

(11) **EP 4 060 841 A1**
(43) Date de publication de la demande: **21.09.2022**
(21) Numéro de dépôt: 22162313.5
(22) Date de dépôt: 15.03.2022
(51) Int. Cl.: H02G 3/32, F16L 3/223, F16L 3/23

(54) **DISPOSITIF D'ORGANISATION DE CÂBLES, ENSEMBLE D'ORGANISATION DE CÂBLES, ET PROCÉDÉ D'ORGANISATION DE CÂBLES À L'AIDE D'UN TEL ENSEMBLE DE CÂBLES**

(30) Priorité: 17.03.2021 FR 2102646
(71) Demandeur: Micab, 76120 Le Grand-Quevilly (FR)
(72) Inventeur: Alonso, Anthony, 76120 Le Grand Quevilly (FR)
(74) Mandataire: Fidal Innovation

(57) **Abrégé**

Dispositif (1) d'organisation de câbles en nappe sur un support, le dispositif (1) d'organisation comprenant un corps (b) principal monobloc
le dispositif (1) d'organisation comprenant en outre une première portion (16) d'empilement et une deuxième portion (18) d'empilement, la première portion (16) et la deuxième portion (18) d'empilement étant conformées pour s'assembler l'une avec l'autre,
de sorte qu'un premier dispositif (1) d'organisation peut être assemblé sur un deuxième dispositif (1) d'organisation.

## Description

### DOMAINE DE L'INVENTION

La présente invention se rapporte au domaine de l'organisation des câbles.

Plus précisément, l'invention se rapporte à un dispositif d'organisation de câbles afin de proposer un haut degré d'organisation des câbles, notamment dans les centres de données, généralement appelés « data centers ».

### ARRIÈRE-PLAN TECHNOLOGIQUE

Un data center comprend en général des équipements informatiques pour le stockage et la restitution de données, mais aussi plus généralement pour la fourniture de services informatiques. Il requiert un grand nombre de connexions, et donc un grand nombre de câbles. Les câbles peuvent avoir des fonctions différentes, notamment l'alimentation, l'arrivée ou la sortie de données, la gestion d'un service particulier. Il est donc hautement recommandé d'être capable d'identifier les câbles, et de les organiser afin d'éviter tout mauvais raccordement et également afin de gagner en temps à l'installation des câbles.

Il est connu de mettre en place des chemins de câbles ou goulottes afin de supporter les câbles le long d'une paroi vertical, ou à proximité d'un plafond, afin de protéger les câbles et d'éviter que les câbles ne restent au sol. Un chemin de câble peut être réalisé par exemple en un treillis de fils, ou en dalle perforée, ou encore en dalle pleine. Une goulotte est généralement pleine, et de dimension inférieure à un chemin de câbles, mais réalise la même fonction de protection et de support de câbles.

Il est alors connu d'utiliser un dispositif de serrage de câble appelé collier pour maintenir un groupe de câbles ensemble tout le long d'un chemin de câbles ou d'une goulotte. Il existe deux types de colliers : les colliers rigides, généralement métalliques qui comprennent un logement et une patte qui bloquent les câbles dans le logement, et les colliers souples, qui comprennent typiquement une partie souple destinée à venir enserrer un groupe de câble, et deux extrémités plus rigides, utilisées pour la fixation sur un chemin de câbles. Un exemple d'un collier rigide est décrit dans le document GB 2 244 08. Un exemple d'un collier souple est décrit dans le document EP 1 215 788.

Toutefois, les colliers de serrage de câbles ne permettent pas de positionner et maintenir chaque câble enserré par le collier dans une position donnée. En outre, si un câble du groupe doit être changé ou déplacé, il faut ouvrir le collier pour l'ensemble du groupe, ce qui peut occasionner une désorganisation des câbles.

Il existe également des dispositifs de type peigne, permettant de séparer les câbles les uns de autres et de les maintenir dans un certain agencement les uns par rapport aux autresdans un chemin de câbles ou une goulotte, comme dans les documents FR 3 015 136 et CN 210404610 par exemple. Dans de tels dispositifs toutefois, les câbles sont empilés les uns par rapport aux autres, de sorte que si un câble doit être changé ou déplacer, tous les câbles situés au-dessus doivent être retirés pour accéder au câble en question.

En outre, que ce soit pour les colliers ou pour les peignes, les dispositifs ne sont adaptés que pour un nombre maximal fixe de câbles. Si le nombre de câbles doit être augmenté au-delà de leur capacité maximale, alors il faut changer le dispositif. A l'inverse, lorsque le nombre de câbles doit être diminué, un collier peut se révéler incapable de retenir un nombre restreint de câbles car il ne permet pas de les serrer suffisamment, tandis qu'un peigne aurait une portion vide et qui augmente donc l'encombrement inutilement.

Il existe donc un besoin pour un nouveau dispositif d'organisation de câbles surmontant notamment les inconvénients précités.

L'invention propose ainsi une solution permettant d'organiser les câbles facilement, permettant leur retrait individuel, sans déranger l'organisation des autres câbles, et permettant de s'adapter facilement aux nombres de câbles à organiser.

### RÉSUMÉ DE L'INVENTION

Ainsi, selon un premier aspect, l'invention se rapporte à un dispositif d'organisation de câbles en nappe sur un support. Plus précisément, le dispositif comprend un corps principal monobloc comportant une section de base qui comprend elle-même un système de fixation du corps principal sur le support, le corps principal comportant en outre une section de retenue de câbles qui comprend quant à elle au moins un bras s'étendant à partir de la section de base jusqu'à une extrémité libre, le bras comprenant des élément de retenue d'au moins un câble, les éléments de retenue retenant de manière individualisée chaque câble.

De préférence, le dispositif comprend deux bras, chaque bras étant pourvu d'au moins une cavité, ouverte pour l'insertion d'un câble, et l'ouverture de la cavité sur un premier bras fait face à l'ouverture d'une cavité sur le deuxième bras. Ainsi, les deux cavités forme un passage pour une nappe comprenant au moins deux câbles, les deux câbles étant retenus dans la cavité correspondante.

Le dispositif d'organisation comprend en outre une première portion d'empilement formée sur la section de base et une deuxième portion d'empilement formée sur l'extrémité libre du bras de la section de retenue. La première portion et la deuxième portion d'empilement sont alors conformées pour s'assembler l'une avec l'autre.

De préférence, l'assemblage de deux dispositifs peut se faire par un mouvement de glissement suivant la direction longitudinale, de sorte que les dispositifs peuvent être manipulés en laissant en place les câbles dans les cavités des dispositifs, en faisant glisser les dispositifs le long des câbles par exemple.

Ainsi, la section de base du corps principal d'un premier dispositif d'organisation peut être assemblée sur la section de retenue du corps principal d'un deuxième dispositif d'organisation.

Grâce à ces dispositions, l'organisation des câbles par exemple dans une salle ou dans une armoire informatique ou électrique est grandement facilitée, notamment grâce à la retenue individuelle des câbles, tout en offrant la possibilité d'ajouter ou de retirer d'autres câbles. Le dispositif permet de mettre en place un haut degré d'organisation des câbles. En effet, les câbles mis en place sur un dispositif d'organisation ont leur position facilement repérable, et fixe, c'est-à-dire que leur position n'est pas impactée par l'ajout ou le retrait de câbles qui se fait facilement, le nombre de câbles à organiser pouvant être augmenté selon les besoins.

Selon différents aspects, il est possible de prévoir l'une et/ou l'autre des caractéristiques ci-dessous prises seules ou en combinaison.

Selon un mode de réalisation, la première portion d'empilement peut présenter une forme complémentaire de la deuxième portion d'empilement, de sorte que l'assemblage de la première portion d'empilement avec la deuxième portion d'empilement est réalisé par emboîtement. Un tel emboîtement se fait alors sans outil ou colle supplémentaire, manuellement par un opérateur, facilitant l'assemblage des dispositifs d'organisation. Par exemple, l'emboîtement peut se faire par un mouvement de glissement longitudinal, de manière à limiter l'impact sur les câbles lors de la manipulation des dispositifs. D'autres solutions d'empilement sont envisageables, par exemple par encliquetage, de préférence en impliquant un mouvement de glissement suivant la direction longitudinale.

Selon un mode de réalisation, la section de retenue peut comprendre au moins un premier bras et un deuxième bras s'étendant à partir de la section de base jusqu'à une extrémité libre. Le premier bras et le deuxième bras forment alors entre eux au moins un passage pour une nappe d'au moins deux câbles, et le premier bras et le deuxième bras comprennent chacun des éléments de retenue des au moins deux câbles de la nappe. La formation de nappes facilite l'organisation des câbles en proposant un niveau supplémentaire d'organisation des câbles. En outre, les câbles étant retenus entre les deux bras dans le passage correspondant, dans l'éventualité où un câble sortirai malencontreusement du passage correspondant, par exemple à cause d'une défaillance des éléments de retenus, le câble peut rester contenu entre les deux bras, et donc peut toujours être localisé au moins par le dispositif sur lequel il est monté.

Selon un mode de réalisation, la section de retenue peut comprendre au moins deux passages entre le premier bras et le deuxième bras, chaque passage étant destiné à retenir une nappe d'au moins deux câbles. En pratique, il pourra avoir autant de passage qu'il est possible d'en former considérant le diamètre des câbles à retenir et la longueur des bras, c'est-à-dire leur dimension entre la section de base et leur extrémité libre. Ainsi, le nombre de câbles retenus par un dispositif d'organisation peut être adapté en adaptant le nombre de passages formés entre deux bras de la section de retenue.

Selon un mode de réalisation, la section de retenue peut comprendre un troisième bras s'étendant à partir de la section de base jusqu'à une extrémité libre, et qui forme avec l'un du premier bras et du deuxième bras au moins un autre passage pour une nappe d'au moins deux câbles. Le deuxième bras et le troisième bras comprennent alors chacun au moins un élément de retenue d'un câble dans ledit autre passage. Ainsi, le nombre de câbles retenus par un dispositif d'organisation peut être adapté en adaptant le nombre de bras de la section de retenue.

Selon un mode de réalisation, le dispositif d'organisation peut comprendre un premier élément d'accolement sur une face située d'un premier côté du corps principal, et un deuxième élément d'accolement sur une face située sur un deuxième côté du corps principal, opposé au premier côté. Le premier élément d'accolement et le deuxième élément d'accolement étant conformés pour s'assembler l'un avec l'autre, permettant ainsi, en plus de l'assemblage par empilement, d'assembler les dispositifs par accolement. Il en résulte que les dispositifs d'organisation permettent de former des ensembles d'organisation de formes variées, en s'adaptant toujours aux nombres de câbles à retenir.

Selon un mode de réalisation, le système de fixation du corps principal sur le support peut comprendre au moins un élément d'accrochage sur un fil d'un chemin de câbles et/ au moins un perçage pour une fixation par vissage sur le support et/ou deux pattes d'encliquetage destinées à être insérées dans une ouverture d'une dalle de chemin de câbles. Le dispositif est adaptable en fonction du type de support, ne limitant pas le support pour l'organisation.

Selon un mode de réalisation, le dispositif d'organisation peut comprendre de plus au moins un bloc de verrouillage. Le bloc de verrouillage peut comprendre notamment au moins une première portion d'empilement conformée pour s'assembler avec la deuxième portion d'empilement du corps principal, de manière à fermer l'espace entre les extrémités libres des bras et empêcher les câbles de sortir malencontreusement.

Le bloc de verrouillage peut en outre comprendre une deuxième portion d'empilement conformée pour s'assembler avec la première portion d'empilement du corps principal, permettant de séparer physiquement le corps principal de deux dispositifs empilés grâce au bloc interposé.

Selon un mode de réalisation, le dispositif est réalisé en PLA. Cette matière est écologique, économique et est adaptée à une fabrication additive, facilitant la fabrication d'un grand nombre de dispositifs d'organisation pour mettre en place une organisation de câbles.

Selon un deuxième aspect, l'invention concerne un ensemble d'organisation de câbles comprenant au moins deux dispositifs d'organisation tels que décrits ci-dessus, dans lequel une première portion d'empilement d'un premier dispositif d'organisation est assemblée sur une deuxième portion (d'empilement du deuxième dispositif d'organisation.

Selon un mode de réalisation, le au moins un passage d'un premier dispositif d'organisation est adapté pour des câbles d'un premier diamètre et le au moins un passage d'un deuxième dispositif d'organisation est adapté pour des câbles d'un deuxième diamètre différent du premier diamètre.

Selon un troisième aspect, l'invention propose un procédé d'organisation de câbles à l'aide d'au moins une ensemble d'organisation tel que présenté ci-dessus, le procédé comprenant les étapes suivantes :
- fixer au moins un premier dispositif d'organisation sur un support ;
- insérer au moins deux câbles dans l'au moins un passage pour une nappe du premier dispositif d'organisation ;
- assembler une première portion d'empilement d'un deuxième dispositif d'organisation sur une deuxième portion d'empilement du premier dispositif d'organisation ;
- insérer au moins deux câbles dans l'au moins un passage pour une nappe du deuxième dispositif d'organisation.

Des câbles peuvent ainsi être facilement organisés, sur plusieurs niveaux de manière à offrir un haut degré d'organisation. En outre, l'organisation des câbles est pérenne et robuste, la position de chaque câble pouvant être maintenue malgré des interventions et des manipulations sur des dispositifs d'organisation. De plus, l'utilisation d'outils pour intervenir sur l'organisation des câbles n'est pas requise. Enfin, chaque dispositif étant monobloc, sans pièces articulées, sa manipulation est facilitée, et son usure est limitée dans le temps, augmentant encore la robustesse et la pérennité d'un ensemble d'organisation.

Selon un mode de réalisation, l'assemblage de la première portion d'empilement du deuxième dispositif d'organisation sur la deuxième portion d'empilement du premier dispositif d'organisation comprend un mouvement de glissement suivant une direction longitudinale correspondant à la direction d'extension du au moins un câble sur les éléments de retenue.

### BRÈVE DESCRIPTION DES DESSINS

Des modes de réalisation de l'invention seront décrits ci-dessous par référence aux dessins, décrits brièvement ci-dessous :
[Fig. 1] représente une vue tridimensionnelle selon une première face d'un dispositif d'organisation de câbles selon un premier mode de réalisation.
[Fig. 2] représente une vue tridimensionnelle selon une deuxième face du dispositif d'organisation de câbles de la figure 1.
[Fig. 3] représente une vue de la première face du dispositif d'organisation de câbles de la figure 1.
[Fig. 4] représente une vue selon un premier côté du dispositif d'organisation de câbles de la figure 1.
[Fig.5] représente une vue selon un deuxième côté du dispositif d'organisation de câbles de la figure 1.
[Fig.6] représente une vue de dessous du dispositif de serrage d'organisation de la figure 1.
[Fig.7] représente une vue tridimensionnelle selon une première face d'un dispositif de d'organisation de câbles selon un deuxième mode de réalisation.
[Fig.8] représente une vue de face du dispositif d'organisation de câbles de la figure 7.
[Fig.9] représente une vue tridimensionnelle selon une deuxième face du dispositif d'organisation de câbles des figures 7 et 8.
[Fig. 10] représente une vue de face d'un dispositif d'organisation de câbles selon un troisième mode de réalisation.
[Fig.11] représente une vue tridimensionnelle selon une première face d'un bloc de verrouillage partie d'un dispositif d'organisation de câbles selon un mode de réalisation.
[Fig.12] représente une vue tridimensionnelle selon une deuxième face du bloc de verrouillage de la figure 11.
[Fig. 13] est une vue de face d'un ensemble de serrage de câbles monté sur un chemin de câble de type dalle, comprenant deux dispositifs d'organisation empilés.

Sur les dessins, des références identiques désignent des objets identiques ou similaires.

### DESCRIPTION DÉTAILLÉE

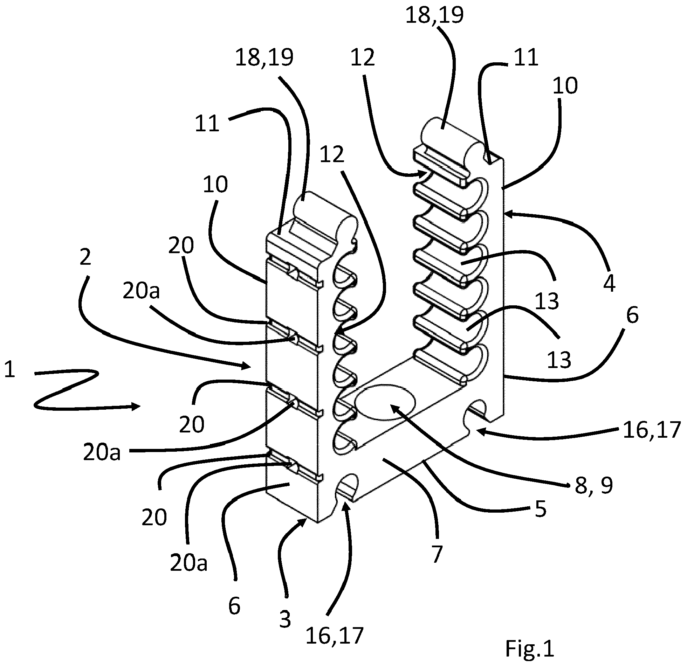

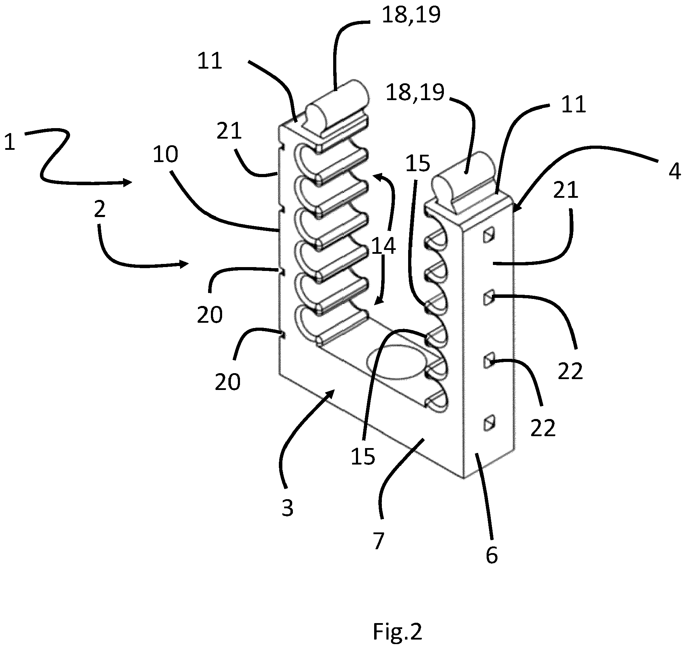

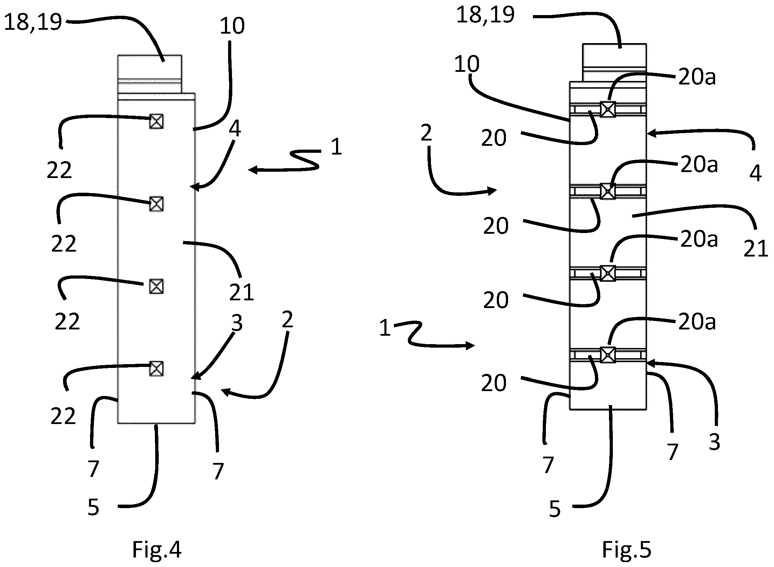

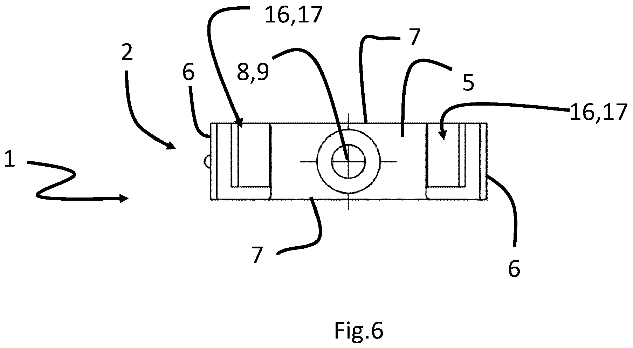

Sur les figures 1 à 6, il est représenté un premier mode de réalisation d'un dispositif 1 d'organisation de câbles sur un support. Un tel dispositif 1 est destiné notamment à l'organisation de câbles en nappe dans un data center. Le support peut notamment être de type chemin de câbles en fils, en dalle pleine ou perforée, ou de type goulotte. En variante, le support peut être une paroi d'une pièce ou d'une salle.

Le dispositif **1** d'organisation comprend un corps **2** principal, lequel corps 2 comporte une section **3** dite de base et une section **4** de retenue des câbles. Le corps 2 est monobloc, c'est-à-dire qu'il est formé en une unique pièce, et s'inscrit sensiblement dans un volume de forme parallélépipédique.

A des fins de simplifications, sans que cela soit limitatif, dans la suite de la description on utilisera les termes, et leurs variantes, au-dessus, au-dessous, haut, bas inférieur et supérieur en référence à l'orientation naturelle des figures dans lesquelles le dispositif 1 est représenté avec la section 3 de base en bas, en dessous de la section 4 de retenue. Ces conventions ne préjugent pas de la position du dispositif lors de son utilisation courante, le dispositif étant destiné à orienter les câbles retenus dans n'importe quelle direction choisie.

La section 3 de base est par exemple de forme générale parallélépipédique, et comprend une surface **5** inférieure sensiblement plane, deux surfaces 6 latérales sensiblement planes et parallèles, et deux surfaces **7** frontales, également sensiblement planes et parallèles.

Dans ce qui suit, le terme longitudinal désigne la direction d'extension des câbles au niveau de leur portion retenue sur le dispositif 1 d'organisation. On définit alors une direction verticale s'étendant du haut vers le bas, et une direction transversale étant sensiblement orthogonale aux deux autres directions. On définit également un plan horizontal, à savoir le plan perpendiculaire à la direction verticale.

Dans ce qui suit, par convention pour toutes les figures, la surface 5 inférieure de la section 3 de base définit donc sensiblement le plan horizontal de la description, la direction verticale est définie orthogonalement au plan horizontal. La direction latérale est sensiblement orthogonale aux surfaces latérales 6. Enfin, la direction longitudinale est orthogonale aux directions verticale et latérale ; les surfaces 7 frontales sont donc sensiblement orthogonales à la direction longitudinale.

La section 3 de base comprend un système **8** de fixation du corps 2 principal sur le support. Selon un mode de réalisation qui est celui des figures 1 à 6, le système 8 de fixation est destiné à réaliser une fixation par vissage, par exemple sur un chemin de câbles de types dalle ou sur une goulotte, ou directement sur une paroi. Ainsi, selon ce premier mode de réalisation, le système 5 comprend au moins une zone **9** perçable, c'est-à-dire destinée à comprendre un perçage. Par exemple, il est prévu que la zone 9 soit perçable aisément avec la tête d'une vis, éventuellement à l'aide d'un outil. La zone 9 perçable peut être identifiée visuellement, par exemple à l'aide d'un cercle, pour être percée ultérieurement, par exemple au moment du montage sur le support.

La section 4 de retenue permet de retenir de manière individualisée les câbles grâce à des éléments de retenue, et également de manière à les organiser en nappes, comme cela sera explicité plus loin.

Plus précisément, la section 4 de retenue comprend notamment au moins deux bras 10 qui s'élèvent sensiblement verticalement à partir de la section 3 de base, jusqu'à une extrémité 11 libre. Chaque bras 10 comporte au moins une cavité 13, et de préférence une pluralité de cavités 13. Les cavités 13 sont notamment traversantes suivant la direction longitudinale pour recevoir un câble. Les cavités 13 des deux bras 10 se font face deux à deux. Plus précisément, chaque cavité comprend une ouverture pour l'insertion d'un câble, et l'ouverture d'une cavité sur un bras 10 fait face à une ouverture d'une cavité sur l'autre bras. Ainsi, deux cavités 13 en face l'une de l'autre, chacune sur un bras 10, forme un passage 14 pour une nappe de deux câbles. Lorsque chaque bras 10 comprend plusieurs cavités 13, plusieurs passages 14 pour une nappe de deux câbles sont formés entre les deux bras 10.

Selon le premier mode de réalisation, la section 4 de retenue comprend par exemple deux bras **10** parallèles l'un à l'autre, s'étendant sensiblement verticalement vers le haut à partir de section 3 de base jusqu'à une extrémité **11** libre de chaque bras 10. Par exemple, chaque bras 10 prolonge verticalement une surface 6 latérale et les deux surfaces 7 frontales de la section 3 de base. Chaque extrémité 11 libre comprend par exemple une surface sensiblement plane, parallèle à la surface 5 inférieure de la section 3 de base.

Chaque bras 10 comprend une surface **12** dite intérieure, faisant face à la surface 12 intérieure de l'autre bras 10. Les deux surfaces 12 intérieures sont à distance l'une de l'autre, et sont par exemple symétriques l'une de l'autre par rapport à un plan verticale perpendiculaire à la direction transversale.

La surface 12 intérieure de chaque bras 10 est pourvue d'au moins une cavité **13** traversante suivant la direction longitudinale, et en l'occurrence six cavités 13 selon le premier mode de réalisation, de forme adaptée pour recevoir un câble et le retenir dans la cavité, réparties verticalement le long de chaque bras 10.

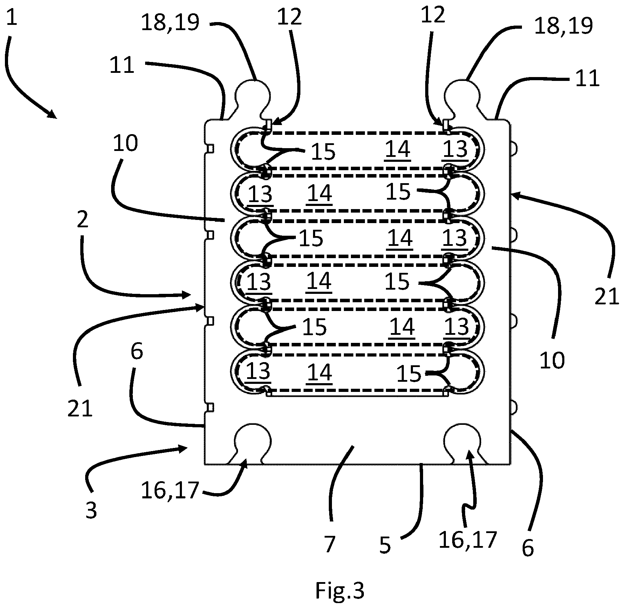

Chaque cavité 13 d'un premier bras 10 fait face à une cavité 13 de l'autre bras 10, de manière à former un passage **14** pour une nappe d'au moins deux câbles, matérialisé en traits discontinus sur la figure 3. Plus précisément, la cavité 13 sur un bras 10 comprend une ouverture pour l'insertion d'un câble qui fait face à l'ouverture d'une cavité 13 sur l'autre bras 10. En d'autres termes, un passage 14 est défini entre une cavité 13 sur un premier bras 10 et la cavité 13 sur le deuxième bras 10 qui est alignée sensiblement transversalement avec la cavité 13 du premier bras 10. Des passages 14 sont ainsi formés les uns au-dessus des autres, répartis entre la section 3 de base et l'extrémité 11 libres des bras 10.

Chaque dispositif 1 permet ainsi de retenir de manière individualisée chaque câble, c'est-à-dire que chaque cavité 13 est dédiée à un unique câble, et le retient.

Plus précisément, à cet effet, chaque passage 14 comprend des éléments **15** de retenue des câbles, les éléments 15 de retenus étant conformés pour retenir chaque câble de manière individualisée, c'est-à-dire indépendamment des autres câbles. En d'autres termes, le retrait ou l'insertion d'un câble sur des éléments 15 de retenue n'implique pas de déplacer ou retirer un ou plusieurs autres câbles déjà en place sur des éléments 15 de retenue dans le passage 14. Par exemple, la section d'une cavité 13 vue dans un plan perpendiculaire à la direction longitudinale (figure 3 par exemple), présente un profil sensiblement circulaire ouvert, les extrémités du profil ouvert étant inclinées l'une vers l'autre de manière à former un élément 15 de retenue par encliquetage : il faut légèrement forcer l'introduction d'un câble dans l'ouverture d'une cavité 13, celle-ci se déformant par élasticité puis reprenant sa forme initiale, toujours par élasticité, empêchant le câble de sortir de la cavité 13. Le diamètre de la section du profil des cavités 13 est déterminé par exemple en fonction des câbles destinés à y être retenus. Ainsi, en variante ou en combinaison, les éléments 15 de retenus peuvent être formés par les cavités 13 elles-mêmes. En effet, le diamètre de la cavité 13 peut être prévu très proche du, voire légèrement inférieure à, diamètre du câble auquel elle est dédiée., de sorte que le câble est retenu par friction dans la cavité 13.

La distance minimale mesurée entre la surface 12 intérieure des deux bras 10 est suffisante afin de laisser accès aux câbles positionnés dans les cavités 13 de chaque passage 14, éventuellement à l'aide d'un outil, de sorte que même lorsque toutes les cavités 13 sont occupées, il est possible de retirer et de replacer un câble par exemple dans une cavité 13 du passage 14 le plus proche de la section 3 de base, en passant entre les extrémités 11 libres des deux bras 10.

Selon le mode de réalisation des figures 1 à 6, le dispositif 1 peut enserrer six nappes de deux câbles, chaque câble étant retenu de manière individualisée.

Afin d'augmenter le nombre de nappes, et donc de câbles, à enserrer, le dispositif 1 comprend des éléments permettant d'assembler par empilement un autre dispositif 1. Par empilement, on désigne ici le fait d'assembler les dispositifs 1 sans ajouter d'élément assurant la liaison entre les pièces, tels que par exemple des vis, des clous ou de la colle. L'assemblage est de préférence amovible, c'est-à-dire que les dispositifs 1 peuvent être désassemblés sans détériorer les dispositifs 1.

Selon un mode de réalisation, l'assemblage se fait par un mouvement de glissement selon la direction longitudinale, c'est-à-dire suivant la direction d'extension des câbles au niveau des dispositifs, de sorte que l'assemblage et le désassemblage de deux dispositifs peuvent être réalisés en faisant glisser les dispositifs le long des câbles déjà installés dans les cavités. Ainsi, pendant les opération d'assemblage et de désassemblage des dispositifs, les câbles peuvent rester en place.

Plus précisément, le dispositif 1 comprend une première portion **16** d'empilement formée sur la section 3 de base. Par exemple, la première portion 16 d'empilement comprend deux ouvertures **17** sur la section 3 de base. Chaque ouverture 17 s'étend longitudinalement à partir de la même face 7 frontale, en direction de l'autre face 7 frontale, sans toutefois la rejoindre. Chaque ouverture 17 débouche par ailleurs sur la face 5 inférieure. Les ouvertures 17 sont par exemple symétriques l'une de l'autre par rapport à un plan perpendiculaire à la direction transversale, et ont une forme adaptée pour une liaison en queue d'aronde : un élément de forme complémentaire à une ouverture 17 ne peut être inséré ou retiré de l'ouverture 17 que par un mouvement de translation selon la direction longitudinale.

Le dispositif 1 comprend en outre une deuxième portion **18** d'empilement, formée la section 4 de retenue. Selon l'exemple des figures, la deuxième portion 18 d'empilement est formée sur l'extrémité 11 libre de chaque bras 10 de la section 4 de retenue. Par exemple, la deuxième portion 18 d'empilement comprend un doigt **19** sur l'extrémité 11 libre de chaque bras 10, prolongeant le bras 10 verticalement vers le haut. La forme de chaque doigt 19 correspond à la forme d'une ouverture 17 de la première portion 16 d'empilement pour former une liaison queue d'aronde.

Ainsi, la deuxième portion 18 d'empilement d'un premier dispositif 1 d'organisation de câble, lequel est par exemple déjà monté sur le support, peut être assemblée avec la première portion 16 d'empilement d'un deuxième dispositif 1 d'organisation en faisant glisser selon la direction longitudinale les doigts 19 du premier dispositif 1 dans les ouvertures 17 du deuxième dispositif 1 : le deuxième dispositif 1 est empilé sur le premier dispositif 1 par emboîtement, la surface 5 inférieure du deuxième dispositif 1 étant en appui contre les extrémités 11 libres des bras. D'autres techniques pour assembler les portions 18, 19 d'empilement peuvent être envisagé, par exemple par encliquetage.

De préférence, les ouvertures 17 sont alignées verticalement avec les doigts 19, de sorte que lorsque deux dispositifs 1 sont empilés, les faces 6 latérales des sections 3 de base des deux dispositifs 1 sont alignées verticalement, afin d'offrir une organisation compacte, et de limiter l'encombrement sur le support.

De préférence, les doigts 19 sont glissés longitudinalement jusqu'à venir en butée contre un fond des ouvertures 17, assurant un bon positionnement relatif entre les deux dispositifs 1 empilés. Par exemple, lorsque les doigts 19 sont en butée longitudinale contre un fond des ouvertures 17, les faces frontales des deux dispositifs 1 empilés sont alignées verticalement. La compacité est ici encore augmentée, pour réduire l'encombrement.

Il ressort qu'un troisième dispositif 1 peut être empilé de la même manière sur le deuxième dispositif 1, et ainsi de suite, en fonction du nombre de câbles à organiser. Il est ainsi possible de former un ensemble **100** d'organisation de câbles, comprenant plusieurs dispositifs 1 d'organisation de câbles assemblés les uns au-dessus des autres en fonction des besoins, à partir d'un seul dispositif 1 fixé au support. En outre, les dispositifs 1 étant assemblés les uns au-dessus des autres, l'organisation des câbles n'est pas limitée par la largeur, c'est-à-dire la dimension transversale, du support.

Comme les câbles sont individualisés sur chaque dispositif 1, tout au long du support, il ressort que le rangement, le repérage, et l'exploitation des câbles sont facilités : d'une part chaque câble peut être changé ou déplacé sans désorganiser les autres câbles, d'autre part l'ajout d'un câble se fait également aisément soit sur un dispositif 1 déjà en place ayant une nappe incomplète, soit par l'assemblage d'un autre dispositif 1, et ce sans revoir l'organisation déjà en place.

Il est alors possible de mettre au point simplement une organisation, par exemple en passant par l'établissement d'un plan de câblage, à partir des dispositifs 1 d'organisation dans lequel chaque câble est repéré, localisé de manière pérenne sur l'ensemble du support.

En outre, on obtient un niveau d'organisation des câbles au sein de chaque dispositif 1 : entre les deux bras 10, les câbles peuvent être réorganisés en fonction des besoins au sein d'un dispositif 1 en déplaçant un câble d'une cavité 13 à une autre. De plus, l'identification de la position des câbles est facilitée : un câble peut être repéré par au moins trois niveaux d'organisation qui sont un dispositif 1, une nappe 14 dans le dispositif, et enfin la cavité 13 dans le dispositif.

Avantageusement, selon un mode de réalisation, un premier dispositif 1 d'organisation peut être accolé à un deuxième dispositif 1 d'organisation, c'est-à-dire que les deux dispositifs 1 d'organisation peuvent être disposés côte à côte sur un support.

A cet effet, le dispositif 1 d'organisation comprend au moins un premier élément d'accolement, qui est selon le premier mode de réalisation une rainure **20,** sur une face **21** latérale extérieure située d'un premier côté du corps 2 principal et au moins un deuxième élément d'accolement, qui est selon le premier mode de réalisation un ergot **22,** situé sur une autre face 21 extérieure située d'un deuxième côté du corps 2 principal, le deuxième côté étant opposé, suivant la direction transversale, au premier côté.

Le premier élément d'accolement et le deuxième élément d'accolement participent à la fixation suivant la direction longitudinale de la position relative des deux dispositifs 1 accolés, de manière à augmenter la compacité et réduire l'encombrement sur un support.

Par exemple, chaque face 21 extérieure est formée par une surface 6 latérale de la base et par la portion de surface du bras 10 correspondante qui prolonge cette surface 6 latérale, et est sensiblement perpendiculaire à la direction transversale.

La rainure 20 du premier élément d'accolement s'étend longitudinalement sur une face 21 extérieure. En pratique, le dispositif 1 d'organisation comprend une pluralité de rainures 20 parallèles, comme selon le mode de réalisation des figures 1 à 6. Les rainures 20 débouchent à leurs deux extrémités sur des surfaces frontales du corps 2.

On appelle ici surfaces frontales du corps 2 les deux surfaces formées par les surfaces 7 frontales de la section 3 de base et par les portions de surface des bras 10 qui les prolongent. Les surfaces frontales du corps 2 sont sensiblement perpendiculaires à la direction longitudinale.

Chaque rainure 20 peut en outre être munie d'un renfoncement 20a, disposé par exemple sensiblement à la moitié de la dimension longitudinale de la rainure.

Les ergots 22 sont en saillie transversale sur l'autre face 21 extérieure. Le nombre d'ergots 22 correspond alors au nombre de rainures 20. Chaque ergot 22 est alors formé de manière complémentaire à une rainure 20 et son renfoncement 20a. La forme, les dimensions des ergots 22 et leur position sur la face 21 extérieure d'un premier dispositif 1 d'organisation sont adaptées pour que chaque ergot glisse dans une rainure 20 d'un deuxième dispositif 1 d'organisation, puis vienne se loger dans le renfoncement 20a correspondant, indiquant que les deux dispositifs sont bien positionnés l'un par rapport à l'autre.

Par exemple, lorsque les ergots 22 du premier dispositif 1 d'organisation sont logés chacun dans le renfoncement 20a d'une rainure correspondante d'un deuxième dispositif 1 d'organisation, alors les faces 7 frontales des deux dispositifs 1 d'organisation sont sensiblement alignées transversalement.

L'organisation des câbles à l'aide des dispositifs 1 est ainsi davantage simplifiée : en plus de pouvoir être associés les uns au-dessus des autres, les dispositifs 1 d'organisation peuvent être associés les uns à côté des autres. Le positionnement des dispositifs 1 d'organisation empilés et accolés leur permet d'être alignés verticalement pour les dispositifs empilés et transversalement pour les dispositifs 1 accolés, de sorte que les dispositifs 1 d'organisation associés forment un système d'organisation compact, permettant d'organiser un nombre de câbles variant en fonction des besoins, à un endroit localisé et fixé sur un support.

Les dispositifs 1 d'organisation d'un ensemble peuvent être tous identiques, notamment peuvent avoir des cavités 13 pour retenir des câbles d'un même diamètre, ou peuvent être chacun dédiés à des câbles de diamètres différents. Sur un même dispositif 1, la dimension des cavités 13 des passages 14 peut également variée d'une cavité 13 à l'autre, et/ou d'un passage 14 à l'autre.

Le nombre de bras 10 peut être supérieur à deux, les passages 14 étant toujours définis entre deux faces 12 intérieures qui sont en vis à vis, de deux bras 10.

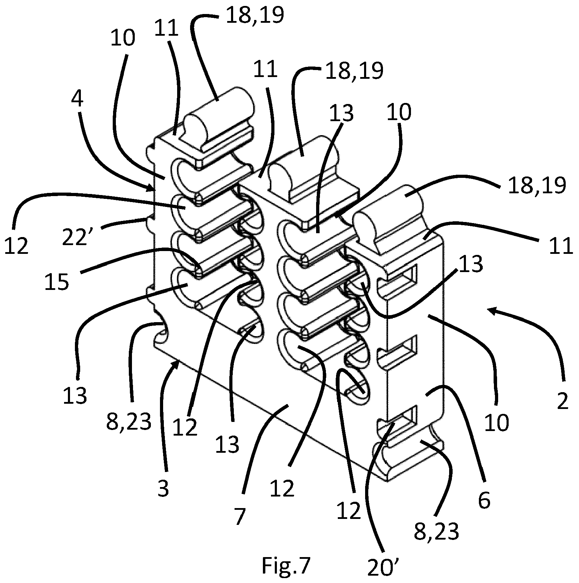

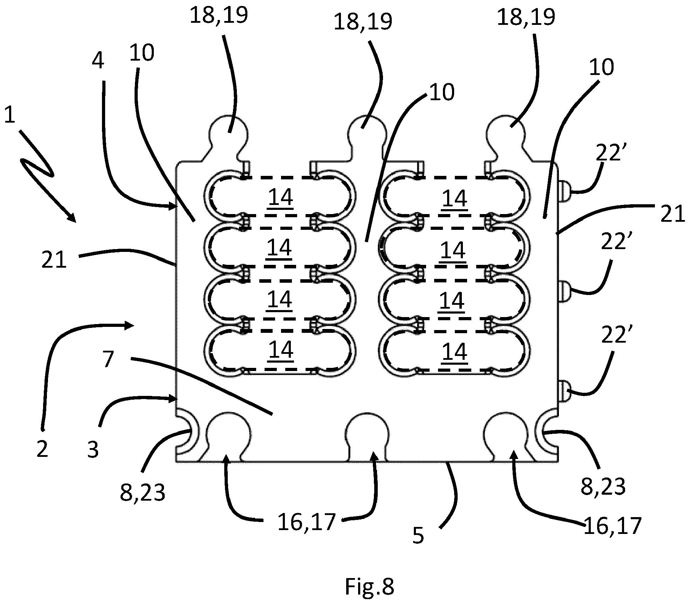

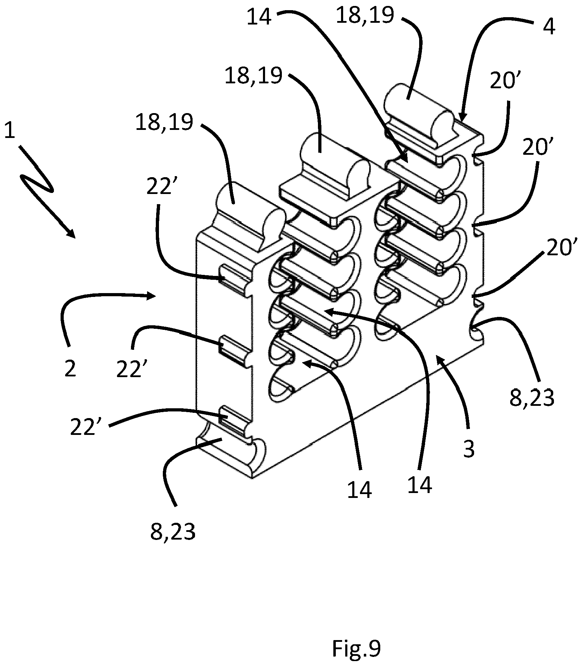

On va maintenant décrire un deuxième mode de réalisation du dispositif 1 d'organisation de câbles, destiné à être monté sur un support de type chemin de câbles en treillis de fils, et illustré sur les figures 7 à 9. Sauf pour les caractéristiques précisées ci-dessous, le dispositif 1 selon le deuxième mode de réalisation reprend les caractéristiques du premier mode de réalisation, et les références sur les figures pour les caractéristiques communes sont les mêmes.

Selon le deuxième mode de réalisation, la section 4 de retenue du dispositif 1 d'organisation comprend trois bras 10, à savoir un premier bras 10 et un deuxième bras 10, chacun disposé sensiblement dans le prolongement des faces 6 latérales de la section 3 de base, et un troisième bras 10 disposé entre les deux autres bras 10. Le troisième bras 10 comprend deux surfaces 12 intérieures, chacune faisant face à une face 12 intérieure du premier bras 10 et du deuxième bras 10. Comme précédemment, des cavités 13 traversantes longitudinalement sont formées sur les surfaces 12 intérieures des bras 10, de sorte que des passages 14 sont formés entre le premier bras 10 et le troisième bras 10, et des passages 14 sont formés entre le deuxième bras 10 et le troisième bras 10. Des éléments 15 de retenues de câbles dans les cavités 13 sont également prévus comme précédemment. Selon l'exemple présenté sur les figures, quatre passages 14 sont définis entre le premier bras 10 et le troisième bras 10, et quatre autres passages 14 sont définis entre le troisième bras 10 et le deuxième bras 10, de sorte que huit passages 14 pour nappe de deux câbles sont formés sur un dispositif 1.

Un doigt 19 de la deuxième portion d'empilement 18 est formé sur l'extrémité 11 libre de chaque bras 10, et trois ouvertures 17 de la première portion 16 d'empilement sont formées en conséquence, de sorte que deux dispositifs 1 selon le deuxième mode de réalisation peuvent être assemblés par emboîtement comme précédemment.

Selon ce deuxième mode de réalisation, le système 8 de fixation du corps 2 principal comprend au moins un élément d'accrochage sur un fil d'un chemin de câbles en treillis de fils.

Par exemple, le système 8 de ce deuxième mode de réalisation comprend deux encoches 23 disposées sur la section 3 de base, sur les faces 6 latérales, et qui s'étendent en débouchant sur chacune des faces 7 frontales. Chaque encoche 23 présente une section selon un plan perpendiculaire à la direction longitudinale dont le profil est semi-circulaire, de diamètre correspondant sensiblement à celui d'un fil de chaîne du chemin de câble formant le support. La dimension transversale entre le centre du profil circulaire des deux encoches 23 correspond sensiblement à la distance transversale entre le centre de deux fils de chaîne adjacents du chemin de câbles, de sorte que les encoches 23 sont mises en prise avec les fils du chemin de câbles en maintenant une légère tension sur les fils pour assurer la fixation. Ainsi, le dispositif 1 d'organisation est placé aisément sur le chemin de câbles, par exemple manuellement, éventuellement à l'aide d'un outil.

Selon le deuxième mode de réalisation, les premiers éléments d'accolement du dispositif 1 comprennent des rainures **20'** longitudinales sur une première face 21 extérieure débouchant sur une seule face frontale du corps 2 principal ; chaque deuxième élément d'accolement comprend une bosse **22'** en saillie transversale sur l'autre face 21 extérieure du corps 2 principal, et de forme et de dimensions complémentaires à celles des rainures 20'.

Ainsi deux dispositifs 1 d'organisation comprenant ces éléments d'accolement selon le deuxième mode de réalisation peuvent être accolés, disposés côte à côte sur un même chemin de câbles en faisant pénétrer les bosses 22' d'un premier dispositif 1 dans les rainures 20' d'un deuxième dispositif. De préférence, chaque bosse 22' viennent en butée longitudinale contre un fond de la rainure 20' correspondante, indiquant à l'opérateur que les deux dispositifs 1 accolés sont bien positionnés l'un par rapport à l'autre. Notamment, les deux dispositifs 1 ont leurs faces 7 frontales alignées transversalement.

De préférence encore, la butée longitudinale des bosses 22' dans les rainures 20' se fait dans le sens opposé à la butée longitudinale des doigts 19 dans les ouvertures 17, facilitant l'accolement d'un premier dispositif 1 avec un deuxième dispositif 1 déjà empilé sur un troisième dispositif 1, et de même facilitant l'empilement d'un premier dispositif 1 avec un deuxième dispositif 1 déjà accolé à un troisième dispositif 1.

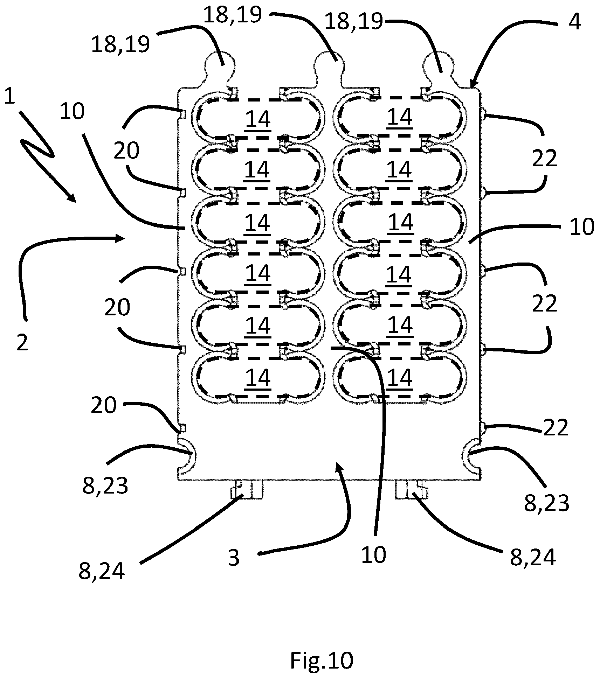

On va maintenant décrire un troisième mode de réalisation du dispositif 1 d'organisation de câbles, destiné à être monté sur un support de type chemin de câbles en treillis de fils ou de type dalle percée d'ouvertures oblongues, par exemple de type dalle marine, et illustré sur la figure 10. Comme précédemment, sauf pour les caractéristiques précisées ci-dessous, le dispositif 1 selon le troisième mode de réalisation reprend les caractéristiques du premier mode et/ou du deuxième mode de réalisation, et les références sur les figures pour les caractéristiques communes sont les mêmes.

Selon ce troisième mode de réalisation, les éléments d'accolement du dispositif 1 d'organisation sont formés par des rainures 20 et des ergots 22 conformes au premier mode de réalisation. Le dispositif 1 d'organisation comprend trois bras 10, définissant deux à deux six passages 14 pour une nappe de deux câbles, de sorte que le dispositif 1 du troisième mode de réalisation comprend douze passages 14.

Selon le troisième mode de réalisation, le système 8 de fixation sur le support comprend des encoches 23 pour l'accrochage sur des fils d'un chemin de câbles en treillis de fils, conformément au deuxième mode de réalisation, et comprend en outre deux pattes **24** d'encliquetage destinées à venir en prise avec le bord d'une ou de deux ouvertures oblongues d'un chemin de câbles de type dalle. Ainsi, chaque patte 24 présente une forme coudée, ou en L, qui s'étend selon la direction transversale à l'opposé l'autre patte 24. Les pattes 24 sont insérées à force contre le bord par exemple d'une même ouverture oblongue du chemin de câbles dalle, de manière à être en prise, sous tension, contre le bord de l'ouverture et assurant la fixation du dispositif 1 d'organisation sur le chemin de câbles.

Selon un mode de réalisation, le dispositif 1 d'organisation de câble peut en outre comprendre un bloc **25** de verrouillage, rapporté sur le corps 2 principal, et destiné à empêcher des câbles dans les passages 14 de sortir d'entre les bras 10 du corps 2 principal. Par exemple, le bloc 25 de verrouillage peut être utilisé pour fermer le dernier dispositif 1 d'organisation d'un empilement, ou entre deux dispositifs 1 d'organisation par exemple afin d'empêcher la sortie de câbles d'un premier dispositif 1 lorsque un dispositif 1 d'organisation, empilé sur le premier, est retiré ou manipulé.

A cet effet, le bloc 25 de verrouillage comprend des éléments d'empilements correspondant à ceux du ou des dispositifs 1 d'organisation avec lesquels il coopère. Plus précisément, le bloc 25 de verrouillage peut comprendre une première portion d'empilement et une deuxième portion d'empilement qui correspondent respectivement à la première portion 16 d'empilement et à la deuxième portion 18 d'empilement du corps 2 principal. Ainsi, par exemple, le bloc 25 de verrouillage comprend, sur une face **26** dite inférieure, sensiblement plane, des ouvertures **27** similaires aux ouvertures 17 du corps principal, et destinées à coopérer avec les doigts 19 du corps 2 principal. Le bloc 25 de verrouillage comprend en outre, sur une face **28** dite supérieure, sensiblement plane, opposée à la surface 26 inférieure, des doigts 29 similaires aux doigts 19 du corps 2 principal, et destinés à coopérer avec des ouvertures 17 du corps 2 principal.

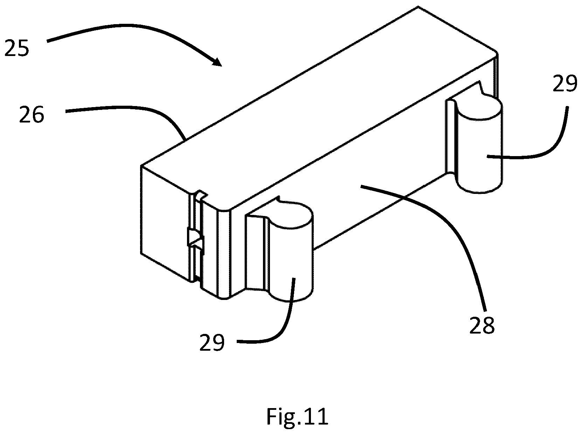

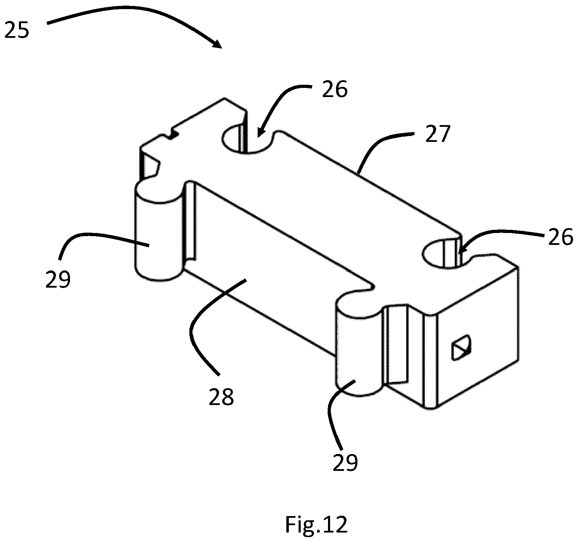

Le bloc 25 de verrouillage peut en outre comprendre des éléments d'accolement correspondant aux éléments d'accolement des dispositifs 1 d'organisation avec lesquels il est prévu de l'associer. Par exemple, comme illustré sur les figures 11 et 12, les éléments d'accolement sont similaires à ceux du corps 2 principal du premier mode de réalisation, et comprennent sur une première face 30 latérale une rainure 31 avec un renfoncement 31a, et sur une deuxième face 32 latérale, opposée à la première face 30 latérale, un ergot 33 en saillie, de forme et de dimension complémentaires de celles du renfoncement 31a.

Ainsi, la rainure 31 d'un bloc 25 de verrouillage d'un premier dispositif 1 d'organisation peut coopérer avec l'ergot 33 du bloc 25 de verrouillage d'un deuxième dispositif de verrouillage, ou avec un ergot 22 du corps 2 principal du deuxième dispositif 1 de verrouillage ; il en est de même pour l'ergot 33 d'un bloc de verrouillage d'un premier dispositif 1 d'organisation avec la rainure 31 du bloc 25 de verrouillage d'un deuxième dispositif 1, ou avec une rainure 20 du corps 2 principal du deuxième dispositif 1.

Les dimensions longitudinale et transversale du bloc 25 de verrouillage correspondent sensiblement aux dimensions du corps 2 principal.

Le corps 2 principal et le bloc 25 de verrouillage sont réalisés en matière rigide, c'est-à-dire qu'ils ne se déforment pas lorsqu'ils sont manipulés, à l'exception des éléments 15 de retenue et du système 8 de fixation qui peuvent accepter une légère déformation élastique, notamment pour obtenir un encliquetage. Par exemple, le corps 2 principal et le bloc 25 de verrouillage sont réalisés en polymère, et notamment en PLA (acide polylactique). Le PLA est un polymère obtenu à partir d'amidon de maïs qui présente de nombreux avantages notamment écologiques, et qui permet par ailleurs une fabrication par fabrication additive.

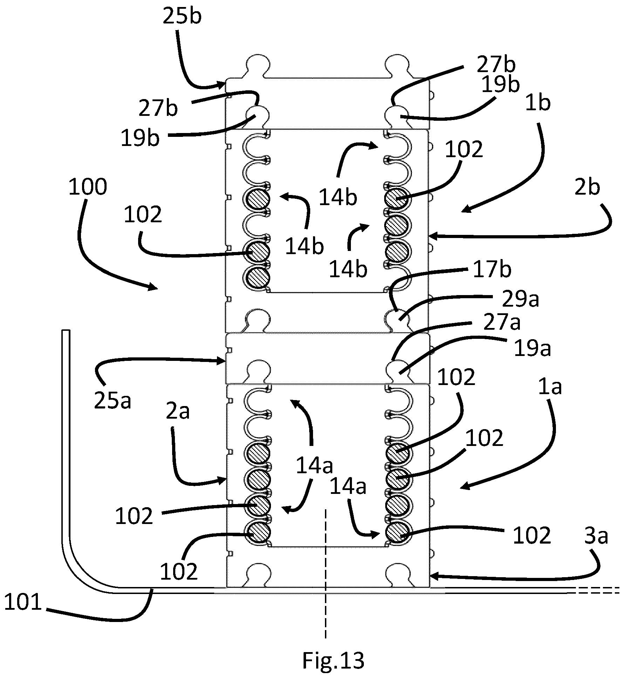

Sur la figure 13, on a représenté un exemple d'un ensemble **100** d'organisation comprenant deux dispositifs 1a, 1b d'organisation de câbles dont les corps 2a, 2b principaux sont conformes au premier mode de réalisation. Chaque dispositif 1a, 1b comprend en outre un bloc 25a, 25b de verrouillage. Des câbles 102 sont placés dans certaines encoches des corps 2a, 2b principaux. Selon l'exemple présenté, un premiers dispositif 1a est fixé, à l'aide de la section 3a de base du corps 2a principal, sur un chemin **101** de câbles de type dalle, à l'aide par exemple d'une vis. Un premier bloc 25a de verrouillage est assemblé sur le premier corps 2a principal, les doigts 19a du corps 2a principal étant insérés dans les ouvertures 27a du bloc 25a de verrouillage. Puis, le deuxième dispositif 1b d'organisation est empilé sur le premier dispositif 1a. Plus précisément, les doigts 29a du bloc 25a du premier dispositif 1a sont insérés dans les ouvertures 17b du deuxième dispositif 1b d'organisation. Le deuxième bloc 25b de verrouillage est assemblé sur le corps 2b du deuxième dispositif 2b de la même manière.

Le deuxième dispositif 1b peut être désassemblé du premier dispositif 1a, et le bloc 25a de verrouillage du premier dispositif 1a peut être désassemblé du corps 2a principal, pour donner accès aux câbles 102 enserrés dans le premier dispositif 1a. Ainsi, un opérateur a accès aux passages 14a du premier dispositif 1a pour, par exemple, retirer, changer ou réparer un câble 102, ou pour ajouter un câble. Les autres câbles 102 enserrés par le premier dispositif 1a ne sont pas déplacés, la distance entre les bras 10 étant suffisante pour accéder au câble concerné sans avoir à retirer les autres câbles 102. Les câbles 102 enserrés par le deuxième dispositif 1b demeurent dans les passages 14b, ne pouvant sortir à cause notamment du bloc 25b de verrouillage.

Ainsi, l'organisation n'est pas perturbée par l'intervention d'un opérateur, assurant sa pérennité.

Les différentes caractéristiques décrites
dans les différents modes de réalisation peuvent être combinées. Notamment, les différences portant sur le nombre de bras 10, la distance entre les surfaces 12 intérieures des bras, le diamètres des cavités 13, le nombre de passages 14, le système 8 de fixation sur un support, les éléments d'accolement, la présence ou non d'un bloc 25 de verrouillage peuvent être combinées au sein d'un même dispositif 1 d'organisation, ou au sein d'un ensemble 100 d'organisation de câbles.

Le dispositif d'organisation permet ainsi de mettre en place facilement une organisation dans un ensemble de câbles dans laquelle chaque câble est identifié, repéré, à une place déterminée tout le long du ou des supports de câbles, et cette place pouvant être conservée même en cas de modification dans l'organisation sur d'autres câbles. Le dispositif propose également un niveau d'organisation au sein d'un dispositif, chaque câble ou chaque nappe de câbles pouvant changer de position, c'est-à-dire de cavité 13, au sein d'un même dispositif. Les dispositifs peuvent être assemblés ensemble simplement, de différentes manières, permettant de s'adapter là aussi à une organisation donnée.

## Revendications

1. Dispositif (1, 1a, 1b) d'organisation de câbles (102) en nappe sur un support, le dispositif (1, 1a, 1b) d'organisation comprenant un corps (2,2a,2b) principal monobloc comportant une section (3) de base qui comprend un système (8) de fixation du corps (2,2a,2b) principal sur le support, le corps (2,2a,2b) principal comportant en outre une section (4) de retenue de câbles qui comprend au moins deux bras (10) s'étendant à partir de la section (3) de base jusqu'à une extrémité (11) libre, chaque bras (10) étant pourvu d'au moins une cavité (13), la cavité (13) d'un premier bras (10) faisant face à une cavité (13) de l'autre bras (10) de manière à former au moins un passage (14, 14a, 14b) pour une nappe d'au moins deux câbles (102), et dans lequel chaque passage des élément (15) de retenue d'au moins un câble (102), les éléments (15) de retenue retenant de manière individualisée chaque câble,
le dispositif (1,1a,1b) d'organisation comprenant en outre une première portion (16) d'empilement formée sur la section (3) de base et une deuxième portion (18) d'empilement formée sur l'extrémité libre (11) de chaque bras (10) de la section (4) de retenue, la première portion (16) et la deuxième portion (18) d'empilement étant conformées pour s'assembler l'une avec l'autre,
de sorte que la section (3) de base du corps (2,2a,2b) principal d'un premier dispositif (1, 1a, 1b) d'organisation peut être assemblée sur la section (4) de retenue du corps (2,2a,2b) principal d'un deuxième dispositif (1, 1a, 1b) d'organisation.

2. Dispositif (1, 1a, 1b) selon la revendication 1, dans lequel la première portion (16) d'empilement présente une forme complémentaire de la deuxième portion (18) d'empilement, de sorte que l'assemblage de la première portion (16) d'empilement avec la deuxième portion (18) d'empilement est réalisé par emboîtement.

3. Dispositif (1, 1a, 1b) selon l'une quelconque des revendications précédentes, dans lequel la section (4) de retenue comprend au moins deux passages (14, 14a, 14b) entre le premier bras (10) et le deuxième bras (10), chaque passage (14, 14a, 14b) étant destiné à retenir une nappe d'au moins deux câbles.

4. Dispositif (1, 1a, 1b) selon l'une quelconque des revendications précédentes, dans lequel la section (4) de retenue comprend un troisième bras (10) s'étendant à partir de la section (3) de base jusqu'à une extrémité (11) libre, et formant avec l'un du premier (10) bras et du deuxième bras (10) au moins un autre passage (14,14a,14b) pour une nappe d'au moins deux câbles, le deuxième bras (10) et le troisième bras (10) comprenant chacun au moins un élément (15) de retenue d'un câble dans ledit autre passage.

5. Dispositif (1, 1a, 1b) selon l'une quelconque des revendications précédentes, comprenant un premier élément (20,20') d'accolement sur une face (21) située d'un premier côté du corps principal (2,2a,2b), et un deuxième élément (22,22') d'accolement sur une face (21) située sur un deuxième côté du corps (2,2a,2b) principal, opposé au premier côté, le premier élément (20,20') d'accolement et le deuxième élément (22,22') d'accolement étant conformés pour s'assembler l'un avec l'autre.

6. Dispositif (1, 1a, 1b) selon l'une quelconque des revendications précédentes, dans lequel le système (8) de fixation du corps principal sur le support comprend au moins un élément (23) d'accrochage sur un fil d'un chemin de câbles.

7. Dispositif (1, 1a, 1b) selon l'une quelconque des revendications précédentes, dans lequel le système (8) de fixation du corps principal sur le support comprend au moins un perçage pour une fixation par vissage sur le support.

8. Dispositif (1, 1a, 1b) selon l'une quelconque des revendications précédentes, dans lequel le système (8) de fixation du corps (2,2a,2b) principal comprend au moins deux pattes (24) d'encliquetage destinées à être insérées dans une ouverture d'une dalle de chemin de câbles.

9. Dispositif (1, 1a, 1b) selon l'une quelconque des revendications précédentes, comprenant de plus au moins un bloc (25,25a,25b) de verrouillage, le bloc (25,25a,25b) de verrouillage comprenant au moins une première portion (26) d'empilement conformée pour s'assembler avec la deuxième portion (18) d'empilement du corps (2,2a,2b) principal.

10. Dispositif (1, 1a, 1b) selon la revendication 10, dans lequel le bloc (25,25a,25b) de verrouillage comprend une deuxième portion (29) d'empilement conformée pour s'assembler avec la première portion (16) d'empilement du corps (2,2a,2b) principal.

11. Dispositif (1, 1a, 1b) selon l'une quelconque des revendications précédentes, dans lequel il est réalisé en PLA.

12. Ensemble (100) d'organisation de câbles comprenant au moins deux dispositifs (1, 1a, 1b) d'organisation selon l'une quelconque des revendications précédentes, dans lequel une première portion (16) d'empilement d'un premier dispositif (1, 1a, 1b) d'organisation est assemblée sur une deuxième portion (18) d'empilement du deuxième dispositif (1, 1a, 1b) d'organisation .

13. Ensemble (100) d'organisation de câbles selon la revendication 12, dans lequel le au moins un passage (14,14a,14b) d'un premier dispositif (1, 1a, 1b) d'organisation est adapté pour des câbles d'un premier diamètre et le au moins un passage d'un deuxième dispositif (1, 1a, 1b) d'organisation est adapté pour des câbles d'un deuxième diamètre différent du premier diamètre.

14. Procédé d'organisation de câbles à l'aide d'au moins un ensemble (100) d'organisation de câbles en nappes selon l'une des revendications 12 ou 13, comprenant les étapes suivantes :
- fixer au moins un premier dispositif (1, 1a, 1b) d'organisation sur un support ;
- insérer au moins un câbles (10) sur des éléments (15) de retenue du premier dispositif (1, 1a, 1b) d'organisation ;
- assembler une première portion (16) d'empilement d'un deuxième dispositif (1, 1a, 1b) d'organisation sur une deuxième portion (18) d'empilement du premier dispositif (1, 1a, 1b) d'organisation ;
- insérer au moins un câble (102) sur les éléments (15) de retenue du deuxième dispositif (1, 1a, 1b) d'organisation.

15. Procédé selon la revendication précédente, dans lequel l'assemblage de la première portion d'empilement du deuxième dispositif (1, 1a, 1b) d'organisation sur la deuxième portion (18) d'empilement du premier dispositif (1, 1a, 1b) d'organisation comprend un mouvement de glissement suivant une direction longitudinale correspondant à la direction d'extension du au moins un câble sur les éléments (15) de retenue.
